# EUROPEAN PATENT APPLICATION

(11) **EP 4 350 574 A1**
(43) Date of publication of application: **10.04.2024**
(21) Application number: 22815270.8
(22) Date of filing: 31.05.2022
(51) Int. Cl.: G06N 3/04

(54) **CONFIGURATION DETERMINATION METHOD AND APPARATUS FOR NEURAL NETWORK MODEL, AND DEVICE AND STORAGE MEDIUM**

(30) Priority: 02.06.2021 CN 202110614422
(71) Applicant: Hangzhou Hikvision Digital Technology Co., Ltd., Hangzhou, Zhejiang 310051 (CN)
(72) Inventor: TU, Zhenyuan, Hangzhou, Zhejiang 310051 (CN); WANG, Qinyu, Hangzhou, Zhejiang 310051 (CN); YU, Zhongwei, Hangzhou, Zhejiang 310051 (CN)
(74) Representative: Epping - Hermann - Fischer
(86) International application number: PCT/CN2022/096253
(87) International publication number: WO 2022/253226

(57) **Abstract**

Disclosed are a method and an apparatus for determining a configuration of a neural network model, and a device and a storage medium. Prior information and universal general information are searched in a preset model cost evaluation table according to dimension information of the target network layer and the hardware instruction for target hardware, so a preset configuration enabling a number of clock cycles of each target network layer to be the minimum can be obtained, that is, a configuration of each target network layer when the number of clock cycles of a target neural network model run is the minimum can be obtained, so that an optimal configuration of the target neural network model in the target hardware is thus obtained, and fast implementation of the neural network model in the target hardware can subsequently be realized by using the optimal configuration.

## Description

The present application claims the priority of a Chinese patent application No. 202110614422.8 filed with the State Intellectual Property Office of People's Republic of China on June 2, 2021 and entitled "Method and apparatus for determining a configuration of a neural network model, and device and storage medium", which is incorporated herein by reference in its entirety.

### TECHNICAL FIELD

The present application relates to the technical field of computers, in particular to a method and an apparatus for determining a configuration of a neural network model, and a device and a storage medium.

### BACKGROUND

With the continuous development of computer technology, artificial intelligence technology has entered a rapid development stage. Among various artificial intelligence technologies, neural network model is the most widely studied and applied, and gradually becomes the most representative artificial intelligence technology.

To evaluate the performance of a neural network model, aspects such as high throughput, low response time, low resource consumption, and simple deployment process are focused. As the neural network model becomes more and more complex and the amount of calculation increases, the hardware adapted to the neural network model is also continuously updated and upgraded. For example, the previous single hardware AI (Artificial Intelligence) acceleration unit is developed to many-core acceleration. However, in a case of new hardware implementation, such a problem often occurs, i.e., after a long period of performance optimization on a previous hardware, a model has achieved optimal performance on the previous hardware, however, when the same model is applied on another hardware, the previously optimized performance cannot be performed and a further long period of performance optimization is required, which is not conducive to the fast implementation of the neural network model.

### SUMMARY

The object of an embodiment of the present application is to provide a method and an apparatus for determining a configuration of a neural network model, and a device and a storage medium, in order to determine a configuration of a neural network model in different hardware, such that fast implementation of the neural network model in the specified hardware can be realized by using the configuration. The specific technical solutions are as follows.

In a first aspect, an embodiment of the present application provides a method for determining a configuration of a neural network model, which includes:
acquiring dimension information of each target network layer in a target neural network model to be configured, and each target hardware instruction for a target hardware for running the target neural network model;
searching prior information and general information in a preset model cost evaluation table according to the dimension information of each target network layer and each target hardware instruction, and determining respectively a preset configuration of each target network layer corresponding to a minimum number of clock cycles of the target network layer running on the target hardware, so as to obtain an optimal configuration of each target network layer in the target neural network model, wherein the prior information comprises an optimal configuration of each preset network layer acquired in advance in different preset test modes, a preset test mode representing using each preset hardware instruction to realize a function of each preset network layer, each preset network layer corresponding to corresponding dimension information, the optimal configuration being a configuration corresponding to the minimum number of clock cycles; and the general information comprises a number of clock cycles required for executing each preset hardware instruction in different preset configurations.

In a possible embodiment, searching the prior information and the general information in the preset model cost evaluation table according to the dimension information of each target network layer and each target hardware instruction, and determining respectively the preset configuration of each target network layer corresponding to the minimum number of clock cycles of the target network layer running on the target hardware, so as to obtain the optimal configuration of each target network layer in the target neural network model, includes:
for each target network layer, searching the prior information of the preset model cost evaluation table according to the dimension information of the target network layer, if the preset network layer corresponding to the target network layer is found, taking the optimal configuration of a found preset network layer as an optimal configuration of the target network layer;
for each target network layer, if there is no preset network layer corresponding to the target network layer in the prior information of the preset model cost evaluation table, determining each target hardware instruction required for realizing a function of the target network layer to obtain a hardware instruction set; searching the general information of the preset model cost evaluation table, determining a number of clock cycles required for executing the hardware instruction set respectively in each preset configuration, and selecting a preset configuration corresponding to the minimum number of clock cycles as the optimal configuration of the target network layer.

In a possible embodiment, establishing the preset model cost evaluation table in advance includes:
acquiring a preset benchmark neural network model;
for each benchmark network layer of the benchmark neural network model, determining preset hardware instructions required for realizing a function of the benchmark network layer in different hardware conditions, and executing each preset hardware instruction respectively in different preset configurations, obtaining a number of clock cycles required for executing each preset hardware instruction respectively in different preset configurations and recording it in a model cost evaluation table as general information;
acquiring a preset dedicated neural network model;
for each dedicated network layer of the dedicated neural network model, realizing a function of the dedicated network layer by using each preset hardware instruction respectively in different preset configurations, obtaining a number of clock cycles required for realizing the function of the dedicated network layer in different preset test modes, taking a preset configuration corresponding to the minimum number of clock cycles as an optimal configuration of the dedicated network layer, obtaining an optimal configuration of the dedicated network layer in different preset test modes and recording it in the model cost evaluation table as prior information.

In a possible embodiment, the method further includes:
generating a configuration file of the target neural network model according to the optimal configuration of each network layer in the target neural network model;
sending the configuration file and the target neural network model to the target hardware, so that the target hardware configures the target neural network model according to the configuration file and runs a configured target neural network model.

In a second aspect, an embodiment of the present application provides an apparatus for determining a configuration of a neural network model, which includes:
a dimensional information acquiring module, configured to acquire dimension information of each target network layer in a target neural network model to be configured, and each target hardware instruction for a target hardware for running the target neural network model;
an optimal configuration determining module, configured to search prior information and general information in a preset model cost evaluation table according to the dimension information of each target network layer and each target hardware instruction, and determining respectively a preset configuration of each target network layer corresponding to a minimum number of clock cycles of the target network layer running on the target hardware, so as to obtain an optimal configuration of each target network layer in the target neural network model, wherein the prior information comprises an optimal configuration of each preset network layer acquired in advance in different preset test modes, a preset test mode representing using each preset hardware instruction to realize a function of each preset network layer, each preset network layer corresponding to corresponding dimension information, the optimal configuration being a configuration corresponding to the minimum number of clock cycles; and the general information comprises a number of clock cycles required for executing each preset hardware instruction in different preset configurations.

In a possible embodiment, the optimal configuration determining module is specifically configured to:
for each target network layer, search the prior information of the preset model cost evaluation table according to the dimension information of the target network layer, if the preset network layer corresponding to the target network layer is found, taking the optimal configuration of a found preset network layer as an optimal configuration of the target network layer;
for each target network layer, if there is no preset network layer corresponding to the target network layer in the prior information of the preset model cost evaluation table, determining each target hardware instruction required for realizing a function of the target network layer to obtain a hardware instruction set; searching the general information of the preset model cost evaluation table, determining a number of clock cycles required for executing the hardware instruction set respectively in each preset configuration, and selecting a preset configuration corresponding to the minimum number of clock cycles as the optimal configuration of the target network layer.

In a possible embodiment, the apparatus further includes a cost evaluation table establishing module, configured to: acquire a preset benchmark neural network model; for each benchmark network layer of the benchmark neural network model, determine preset hardware instructions required for realizing a function of the benchmark network layer in different hardware conditions, and execute each preset hardware instruction respectively in different preset configurations, obtain a number of clock cycles required for executing each preset hardware instruction respectively in different preset configurations and record it in a model cost evaluation table as general information; acquire a preset dedicated neural network model; for each dedicated network layer of the dedicated neural network model, realize a function of the dedicated network layer by using each preset hardware instruction respectively in different preset configurations, obtain a number of clock cycles required for realizing the function of the dedicated network layer in different preset test modes, take a preset configuration corresponding to the minimum number of clock cycles as an optimal configuration of the dedicated network layer, obtain an optimal configuration of the dedicated network layer in different preset test modes and record it in the model cost evaluation table as prior information.

In a possible embodiment, the apparatus further includes:
a configuration file generating module, configured to generate a configuration file of the target neural network model according to the optimal configuration of each network layer in the target neural network model;
a configuration file sending module, configured to send the configuration file and the target neural network model to the target hardware, so that the target hardware configures the target neural network model according to the configuration file and runs a configured target neural network model.

In a third aspect, an embodiment of the present application provides an electronic device comprising a memory and a processor, wherein
the memory is configured to store a computer program; and
the processor is configured to, when the computer program stored on the memory is executed by the processor, carry out any one of the method for determining a configuration of a neural network model in the present application.

In a fourth aspect, an embodiment of the present application provides a computer storage medium, storing a computer program thereon, wherein when the computer program is executed by a processor, the computer program carries out any one of the method for determining a configuration of a neural network model in the present application.

Beneficial effects of the embodiments of the present application:
According to the method and the apparatus for determining a configuration of a neural network model, and the device and the storage medium provided by the embodiments of the present application, dimension information of each target network layer in a target neural network model to be configured, and each target hardware instruction for a target hardware for running the target neural network model are acquired; prior information and general information in a preset model cost evaluation table are searched according to the dimension information of each target network layer and each target hardware instruction, and a preset configuration of each target network layer corresponding to a minimum number of clock cycles of the target network layer running on the target hardware is respectively determined, so as to obtain an optimal configuration of each target network layer in the target neural network model. Prior information and universal general information are searched in a preset model cost evaluation table according to dimension information of the target network layer and the hardware instruction for target hardware, so that a preset configuration which enables a number of clock cycles of each target network layer to be the minimum can be obtained, that is, a configuration of each target network layer when the number of clock cycles of a target neural network model running is the minimum can be obtained, and the optimal configuration of the target neural network model in the target hardware is thus obtained, such that a fast implementation of the neural network model in the target hardware can subsequently be realized by using the optimal configuration. Of course, any one of the products or methods of the present application does not necessarily require achieving all the above-mentioned advantages simultaneously.

### BRIEF DESCRIPTION OF THE DRAWINGS

In order to more clearly describe the technical solutions of the embodiments of the application and the prior art, accompanying drawings that need to be used in the embodiments and the prior art will be briefly described below. Obviously, accompanying drawings described below are for only some of embodiments of the application. Those skilled in the art may also obtain other accompanying drawings based on these accompanying drawings without any creative efforts.
Figure 1 is a first schematic diagram of a method for determining a configuration of a neural network model according to an embodiment of the present application;
Figure 2 is a schematic diagram of adding a configuration file to a model head in an embodiment of the present application;
Figure 3a is a second schematic diagram of a method for determining a configuration of a neural network model according to an embodiment of the present application;
Figure 3b is a schematic diagram of a method for determining a network layer configuration by using prior information according to an embodiment of the present application;
Figure 4 is a schematic diagram of a process of establishing a preset model cost evaluation table according to an embodiment of the present application;
Figure 5 is a schematic diagram of a linked list according to an embodiment of the present application;
Figure 6 is a third schematic diagram of a method for determining a configuration of a neural network model according to an embodiment of the present application;
FIG. 7 is a schematic diagram of an electronic device according to an embodiment of the present application.

### DETAILED DESCRIPTION

In order to make the objective, technical solutions and advantages of the application clearer and more understandable, the application will be described in more detail below with reference to the accompanying drawings and embodiments. Obviously, the described embodiments are only some, and not all, of the embodiments of the application. All other embodiments obtained based on the embodiments of the application by those skilled in the art without any creative efforts fall into the scope of protection of the application.

Firstly, relevant terms involved in the present application are introduced:
Deep learning network: Currently, the academic community has proposed various neural network models, such as perceptron, feedforward neural networks, convolutional neural networks, recurrent neural networks, algorithm-hardware mapping, etc. The differences among these different neural network models mainly lie in the activation rules of neurons, the topological structure of the neural network models, and the parameter learning algorithms, etc. Common network types include: convolutional neural network, recurrent neural network, deep belief network, generative adversarial network, deep reinforcement learning network, etc.

CNN (Convolutional Neural Networks): Convolutional neural networks are one type of the feedforward neural networks introduced before. They have a unique effect on the processing of graphic images and at least include convolutional layers and pooling layers in structure. Convolutional neural networks are deep learning networks that have been continuously developed in recent years, and widely valued by academic circles and used in enterprises. Representative convolutional neural networks include LeNet-5, VGG (Visual Geometry Group Network), AlexNet, etc. Currently, convolutional neural networks are mainly used in object detection and recognition in images and video understanding.

LSTM (Long Short Term Memory): It is a type of recurrent neural networks. Different from convolutional neural networks, recurrent neural networks are better at processing language text. The analysis processing of text pays more attention to the connection between temporal input and context. The internal memory structure of the recurrent neural networks exactly meets such demand scenarios, therefore the recurrent neural networks are superior in text processing. Currently, the main implementation scenarios of recurrent neural networks are in the fields of NLP (Neuro-Linguistic Programming) such as machine translation and sentiment analysis. In particular, the news writing robot that has been exposed more by the media in recent years is also an application based on the recurrent neural networks. In addition, the recurrent neural networks can also realize automatic poetry writing, automatic writing of lyrics, and even automatic coding.

After a long period of performance optimization on the previous hardware, a model has achieved an optimal performance on the previous hardware. However, after the same model is applied on another hardware, the previously optimized performance cannot be performed, and a further long period of performance optimization is required, which is not conducive to the fast implementation of the neural network model. Therefore, a neural network model needs to be optimized for different hardware. When optimizing hardware performance, the more cores there are, the more points need to be considered for performance optimization. For example, there are many ways to implement convolution, such as common direct convolution and Winograd convolution. The Winograd convolution has obvious execution effect, but the weight of Winograd is 16:9 compared to the weight of ordinary convolution, thereby taking a longer time for transportation. Although the calculation time is reduced, data transfer has become a bottleneck. Therefore, when selecting a configuration, it is necessary to focus on the balance between throughput and delay. When a deep learning network is very large, such as comprising hundreds of layers, the convolutional layers therein will account for a large proportion. How to select the optimal convolutional implementation method for each convolutional layer is an urgent problem that needs to be solved.

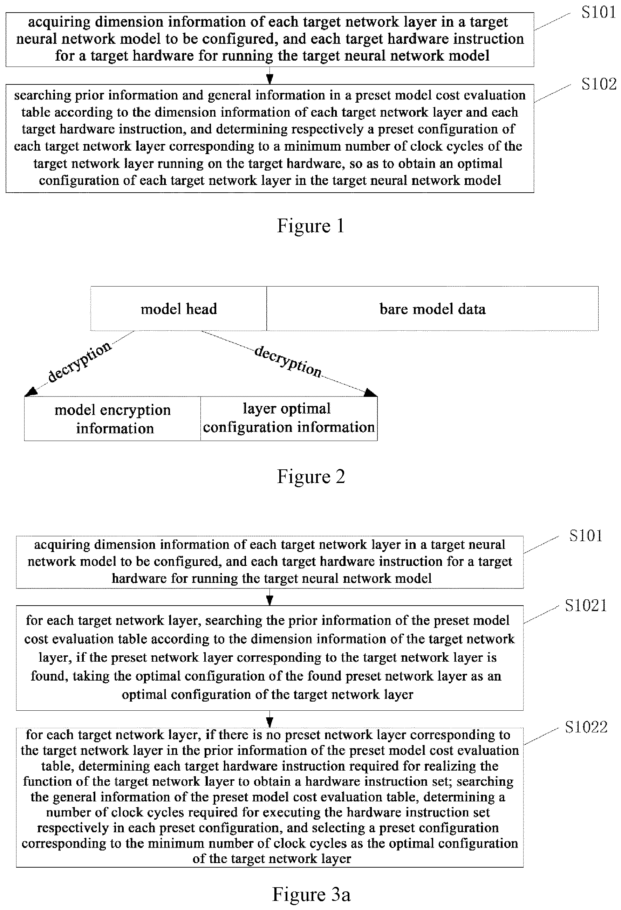

In order to solve the above problem, an embodiment of the present application provides a method for determining a configuration of a neural network model. Referring to Figure 1, the method includes:
S101. acquiring dimension information of each target network layer in a target neural network model to be configured, and each target hardware instruction for a target hardware for running the target neural network model.

The method for determining a configuration of a neural network model according to the embodiments of the present application can be implemented by an electronic device. Specifically, the electronic device can be a server, a personal computer, a smart phone, a smart camera, or a hard disk video recorder, etc.

The target neural network model to be configured can be any neural network model that needs to be configured, for embodiment, it can be a convolutional neural network, a recurrent neural network, a deep belief network, a generative adversarial network, a deep reinforcement learning network, etc. The specific types of the target neural network model are not limited in the present application.

The neural network model contains multiple network layers. The type and number of network layers in different neural network models can be different and need to be set according to the specific function of the neural network model. A common network layer can be a convolutional layer, a pooling layer and a fully connected layer, etc. A network layer in the target neural network model is referred to as a target network layer.

The dimension information of the network layer represents a dimension of data processed by the network layer. For example, a convolutional layer with a dimension of 5x5 can be used to process a 5x5 matrix and a 3x3 matrix, and a convolutional layer with a dimension of 3×3 can be used to process a 3×3 matrix etc. The hardware instruction in the embodiment of the present application refers to an instruction required for being executed when the neural network model is run on the hardware. The hardware instruction corresponds to a hardware structure of the hardware, and the hardware instructions for the hardware with the same hardware structure are the same. The hardware used to run the target neural network model is referred to as target hardware, and the hardware instruction for the target hardware is referred to as a target hardware instruction.

S102. searching prior information and general information in a preset model cost evaluation table according to the dimension information of each target network layer and each target hardware instruction, and determining respectively a preset configuration of each target network layer corresponding to a minimum number of clock cycles of the target network layer running on the target hardware, so as to obtain an optimal configuration of each target network layer in the target neural network model, wherein the prior information includes an optimal configuration of each preset network layer acquired in advance in different preset test modes, a preset test mode representing using each preset hardware instruction to realize a function of each preset network layer, each preset network layer corresponding to corresponding dimension information, the optimal configuration being a configuration corresponding to the minimum number of clock cycles; and the general information includes the number of clock cycles required for executing each preset hardware instruction in different preset configurations.

The preset configuration is each preset configuration strategy, for embodiment, for a convolutional layer, it can include an ordinary convolution, a Winograd convolution, etc.

The preset model cost evaluation table mainly records two parts of data. The first part is the number of clock cycles required for executing each preset hardware instruction in different preset configurations and obtained based on a general neural network model, wherein the number of clock cycles represents the duration, and the number of clock cycles required is the duration required. The preset hardware instruction is the hardware instruction required for realizing the function of each preset network layer (pre-specified general network layer) in different hardware. This part of the data is universal and is referred to as general information. The second part is a preset configuration of the minimum number of clock cycles required for realizing the function of the preset network layer (a dedicated network layer, wherein dimension information of the dedicated network layer has been determined) by using the preset hardware instruction and obtained based on the dedicated neural network model, which is referred to as prior information.

For any one of the target network layers, firstly, whether there is a relevant record in the second the prior information part of realizing the function of the preset network layer with the same dimension information (and also the same network type) as the target network layer by using the target hardware instruction for the target hardware is searched. If there is, an optimal configuration of the corresponding preset network layer is directly taken as the optimal configuration of the target network layer; if there is not, a traverse of the first general information part is needed: in different preset configurations, different number of clock cycles are required for realizing the function of the target network layer through the target hardware instruction, and the preset configuration corresponding to the minimum number of clock cycles is selected as the optimal configuration of the target network layer.

Each target network layer selects the preset configuration corresponding to the minimum number of clock cycles, so that the number of clock cycles required for running the entire target neural network model is the minimum, and the target neural network model is run at the fastest speed.

In the embodiment of the present application, prior information and universal general information are searched in a preset model cost evaluation table according to dimension information of the target network layer and the hardware instruction for target hardware, so that a preset configuration which enables a number of clock cycles of each target network layer to be the minimum can be obtained, that is, a configuration of each target network layer when the number of clock cycles of a target neural network model running is the minimum can be obtained, and an optimal configuration of the target neural network model in the target hardware is thus obtained, such that a fast implementation of the neural network model in the target hardware can subsequently be realized by using the optimal configuration.

An electronic device used to run a target neural network model is referred as a target electronic device. The method for determining a configuration of a neural network model in the embodiments of the present application can be realized by other electronic devices (such as a server, etc.) that are different from the target electronic device; in a possible embodiment, the above method further includes:
Step 1: generating a configuration file of the above target neural network model based on the optimal configuration of each network layer in the above target neural network model.
Step 2: sending the above configuration file and the above target neural network model to the above target hardware, so that the above target hardware configures the above target neural network model based on the above configuration file and runs the configured target neural network model.

Before forward reasoning, models of different business scenarios, based on the optimal configuration of each network layer in the target neural network model, generate an optimal layer algorithm configuration file on the specified electronic device hardware. As shown in Figure 2, the optimal configuration file is placed together with the target neural network model to form a new neural network model. The new neural network model can be stored in the electronic device. Before forward reasoning, the new neural network model will first parse the configuration file of its head, add the optimal configuration for each network layer, and then execute in sequence the optimal layer algorithm by using the neural network model.

For example, the neural network model executes an offline reasoning process before forward reasoning. During the execution of offline reasoning, according to dimension information of the network layer and the preset model cost evaluation table, an optimal configuration is selected for the execution method of each layer, so as to generate an offline configuration file and place this configuration file into the head of the original model, thus forming a new convolutional neural network model. When the convolutional neural network is executed, an optimal configuration of each layer is firstly parsed, and then each layer is executed according to the optimal configuration, so that the performance of the entire network reaches the optimal state.

The method for determining a configuration of a neural network model in the embodiments of the present application can be achieved by an electronic device configured to run the target neural network model; in a possible embodiment, the above method further includes: according to the optimal configuration of each network layer in the target neural network model, configuring each network layer of the target neural network model respectively. The optimal configuration is added to each network layer of the target neural network model respectively, and then the optimal layer algorithm is executed in sequence by using the neural network model.

In a possible embodiment, referring to Figure 3a, searching prior information and general information in a preset model cost evaluation table according to the dimension information of each target network layer and each target hardware instruction, and determining respectively a preset configuration of each target network layer corresponding to a minimum number of clock cycles of the target network layer running on the target hardware, so as to obtain an optimal configuration of each target network layer in the target neural network model, includes:
S1021. for each target network layer, searching the prior information of the preset model cost evaluation table according to the dimension information of the target network layer, if the preset network layer corresponding to the target network layer is found, taking the optimal configuration of the found preset network layer as an optimal configuration of the target network layer.

For each target network layer, when there is a preset network layer in the prior information of the preset model cost evaluation table, wherein the dimension information and network type of the preset network layer and the target network layer are the same, and the optimal configuration for realizing a function of the preset network layer by using the target hardware instruction is recorded, it is determined that the preset network layer is a preset network layer corresponding to the target network layer. In one example, for each target network layer, it can firstly be determined whether there is a preset network layer with the same dimension information (and also the same network type) as the target network layer (hereinafter referred to as a first preset network layer) in the prior information of the preset model cost evaluation table. If there is a first preset network layer, it is determined whether there is a record of realizing the function of the first preset network layer by using the target hardware instruction for the target hardware. If there is such a record, the optimal configuration for realizing the function of the first preset network layer by using the target hardware instruction is directly read as the optimal configuration of the current target network layer.

S1022. for each target network layer, if there is no preset network layer corresponding to the target network layer in the prior information of the preset model cost evaluation table, determining each target hardware instruction required for realizing the function of the target network layer to obtain a hardware instruction set; searching the general information of the preset model cost evaluation table, determining a number of clock cycles required for executing the hardware instruction set respectively in each preset configuration, and selecting a preset configuration corresponding to the minimum number of clock cycles as the optimal configuration of the target network layer.

When there is no optimal configuration for realizing the function of the first network layer through the target hardware instruction in the first network layer preset model cost evaluation table, a universal search needs to be performed to obtain an optimal configuration of the target network layer by searching general information. In one example, taking the target hardware executing two hardware instructions, the first and the second hardware instructions, to realize the function of the target network layer as an example, the preset model cost evaluation table is searched, to obtain, for any one of the preset configuration, the number of clock cycles required for executing the first hardware instruction and the number of clock cycles required for executing the second hardware instruction in the preset configuration, so as to obtain the total number of clock cycles required to realize the function of the target network layer in the preset configuration; and then the preset configuration enabling the total number of clock cycles to be the minimum is selected as the optimal configuration of the target network layer.

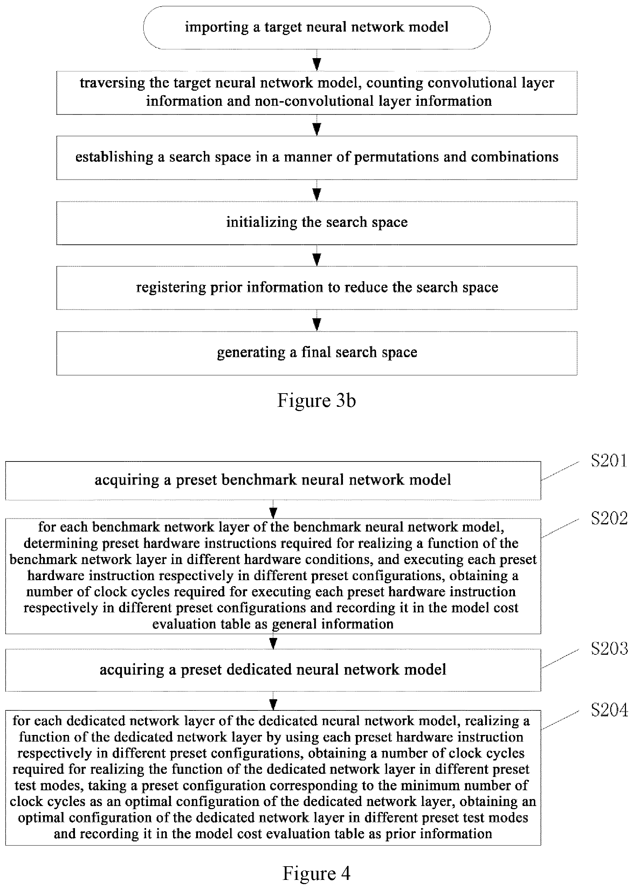

In an example, as shown in Figure 3b, a method for determining network layer configuration by using prior information includes:
Step 1. acquiring a target neural network model to be configured.
Step 2. traversing the target neural network model to obtain information of each target network layer. Acquiring the information of the target network layer, includes counting convolutional layer information and non-convolutional layer information. In one example, the information of the target network layer can specifically be dimensional information of the convolutional layer information and dimensional information of the non-convolutional layer.
Step 3. establishing a search space in a manner of permutations and combinations.
Step 4. initializing the search space.

The search space represents a mapping table between a computing unit and each target network layer of the target neural network model. The search space may include dimensional information of each target network layer, a hardware instruction used by the target hardware to realize the function of the target network layer, and other data.

Step 5. registering prior information to reduce the search space.

For each target network layer, it can firstly be determined whether there is a preset network layer with the same dimension information as the target network layer (hereinafter referred to as a second preset network layer) in the preset model cost evaluation table. If there is a second preset network layer, it is determined whether there is a record of realizing the function of the second preset network layer by using the hardware instruction for the target hardware. If there is the record, the preset configuration corresponding to the minimum number of clock cycles required for realizing the function of the second preset network layer by using the hardware instruction for the target hardware is directly read as the optimal configuration of the target network layer. The target network layer whose optimal configuration has been determined is deleted in the search space.

Step 6. generating a final search space.

After a match by the prior information, the final search space is obtained. The target network layer in the final search space needs to be universally searched. Taking the target hardware executing two hardware instructions, the first and the second hardware instructions, to realize the function of the target network layer as an example, the preset model cost evaluation table is searched, to obtain, for each preset configuration, the number of clock cycles required for executing the first hardware instruction and the number of clock cycles required for executing the second hardware instruction in the preset configuration, so as to obtain the total number of clock cycles required to realize the function of the target network layer in the preset configuration; and then the preset configuration enabling the total number of clock cycles to be the minimum is selected as the optimal configuration of the target network layer.

In a possible embodiment, referring to Figure 4, establishing the preset model cost evaluation table in advance includes:
S201. acquiring a preset benchmark neural network model.

The benchmark neural network model can be customized and selected according to the actual situation. Generally, the benchmark neural network model needs to be universal and representative. For example, a general convolutional neural network model can be selected as the benchmark neural network model.

S202. for each benchmark network layer of the benchmark neural network model, determining preset hardware instructions required for realizing a function of the benchmark network layer in different hardware conditions, and executing each preset hardware instruction respectively in different preset configurations, obtaining a number of clock cycles required for executing each preset hardware instruction respectively in different preset configurations and recording it in the model cost evaluation table as general information.

The hardware instruction corresponds to the structure of the hardware, and the hardware instructions required for each sample hardware with different structures to realize the function of the benchmark network layer are acquired to obtain each preset hardware instruction. For each preset hardware instruction, the preset hardware instruction is executed respectively in different preset configurations to obtain the number of clock cycles required for executing the preset hardware instruction in different preset configurations and record it as general information to the model cost evaluation table.

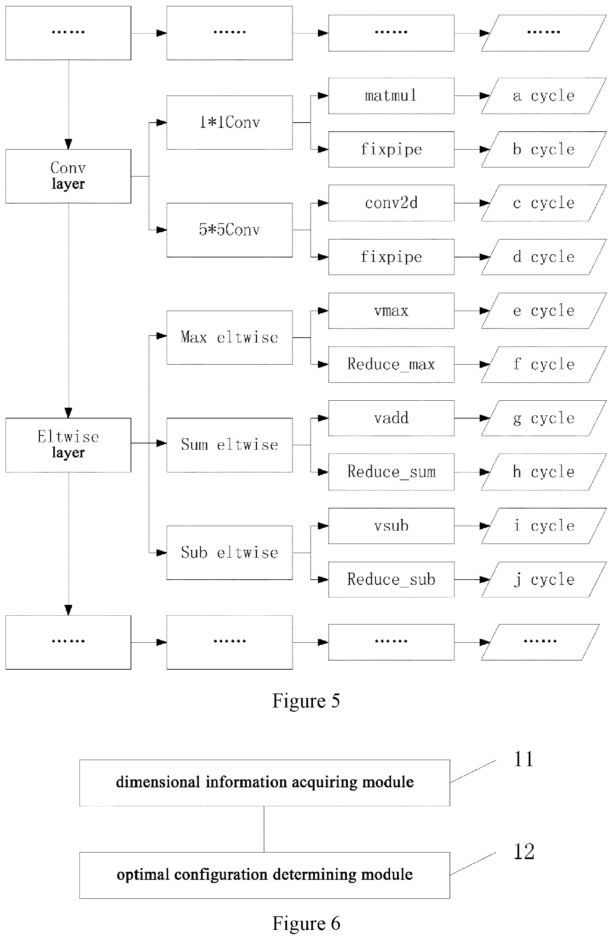

Specifically, for the benchmark neural network model, information of all network layers in this model is counted, for example, the number of 1 * 1 convolutional layers, the number of 3*3 convolutional layers, the number of max type of the pooling layers, and the number of average type of the pooling layers, etc. And then according to the information of these network layers, the hardware instruction required for realizing the function of the network layers is searched for on the sample hardware. For example, two instructions, i.e., matmul and fixpipe, are required for realizing the function of the convolution layer; multiple instructions, i.e., vadd, vsub, vcmp, vmin, reduce, etc., are required for realizing the function of the Element-wise layer. Then based on the sample hardware, the number of Cycles (the number of clock cycles) required for executing these basic hardware instructions is found out, and a linked list is established, such as shown in Figure 5, wherein the Conv layer represents the convolutional layer; the Eltwise layer is an element operation layer configured to fuse elements according to their position; Max Eltwise represents taking the maximum value, Sum Eltwise represents adding and subtracting, and Sub Eltwise represents replacing, wherein, the Conv layer includes 1 * 1 conv layer and 5*5 conv layer, and wherein there are two instructions, i.e., matmul and fixpipe, required for realizing the function of the 1 * 1 conv layer, two instructions, i.e., conv2d and fixpipe, required for realizing the function of the 5*5 conv layer, two instructions, i.e., vmax and reduce max, required for realizing the function of the Max Eltwise, two instructions, i.e., vadd and reduce_sum, required for realizing the function of the Sum Eltwise, and two instructions, i.e., vsub and reduce_sub, required for realizing the function of Sub Eltwise.

S203. acquiring a preset dedicated neural network model.

The dedicated neural network model is a specialized model used to implement specific intelligent algorithms. It can be understood that the dedicated neural network models of intelligent algorithms in different business scenarios are different, so an exhaustive list cannot be made. In actual application scenarios, the dedicated neural network model can be selected based on the neural network model used in actual business scenarios.

S204. for each dedicated network layer of the dedicated neural network model, realizing a function of the dedicated network layer by using each preset hardware instruction respectively in different preset configurations, obtaining a number of clock cycles required for realizing the function of the dedicated network layer in different preset test modes, taking a preset configuration corresponding to the minimum number of clock cycles as an optimal configuration of the dedicated network layer, obtaining an optimal configuration of the dedicated network layer in different preset test modes and recording it in the model cost evaluation table as prior information.

Since the linked list established in step S202 is separated from the network layer of the actual neural network model and is simply obtained based on the execution of basic hardware instructions by the hardware, when the entire network model is executed, when each layer calls the optimal algorithm, there will be a process of an intermediate data conversion, such as the most common 0-fill operation, which will introduce additional time consumption. In some cases, this part of time consumption may result in the entire network not being optimal in terms of time consumption. Step S202 involves hardware-based clock cycle counting. Dimension alignment operations such as dimension 0-fill operation are further involved. However, this part of time consumption is not included in the counting of step S202, and results in the performance of the entire network not being optimal. Therefore, it is necessary to carry out separate counting specifically for such situations. For example, taking convolution as an example, it is determined in step S202 that the time of Winograd convolution is the minimum. However, considering that the entire network model needs to adapt to the hardware, when the convolution of the first layer is realized, additional alignment of the number of channels is required for executing the 0-fill operation, and then it is necessary to fix the convolution of the first layer or the convolution with an input channel number equal to 3 specifically to use ordinary convolution implementation, etc. And the number of clock cycles required for realizing the function of the convolution layer with an input channel number equal to 3 (the convolution of the first layer) by using ordinary convolution (configuration) is minimum under the current hardware. This is the prior information, that is, the data that needs to be recorded in the preset model cost evaluation table.

In the present application, a preset model cost evaluation table is established in two dimensions, and a linked list of the number of Cycle (clock cycle) corresponding to hardware instructions is generated according to the benchmark neural network model, dimensional information of common convolutional neural networks is summarized by using the big data, the linked list is supplemented and expanded to obtain a preset model cost evaluation table. The configuration of each network layer can be flexibly determined for different hardware, so that the neural network model can achieve higher performance when executed on current hardware.

An embodiments of the present application further provides an apparatus for determining a configuration of a neural network model. Referring to Figure 6, the apparatus includes:
a dimensional information acquiring module 11, configured to acquire dimension information of each target network layer in a target neural network model to be configured, and each target hardware instruction for a target hardware for running the target neural network model;
an optimal configuration determining module 12, configured to search prior information and general information in a preset model cost evaluation table according to the dimension information of each target network layer and each target hardware instruction, and determining respectively a preset configuration of each target network layer corresponding to a minimum number of clock cycles of the target network layer running on the target hardware, so as to obtain an optimal configuration of each target network layer in the target neural network model, wherein the prior information includes an optimal configuration of each preset network layer acquired in advance in different preset test modes, a preset test mode representing using each preset hardware instruction to realize a function of each preset network layer, each preset network layer corresponds to corresponding dimension information, the optimal configuration is a configuration corresponding to the minimum number of clock cycles; and the general information includes the number of clock cycles required for executing each preset hardware instruction in different preset configurations.

In a possible embodiment, the optimal configuration determining module is specifically configured to: for each target network layer, search the prior information of the preset model cost evaluation table according to the dimension information of the target network layer, if the preset network layer corresponding to the target network layer is found, taking the optimal configuration of the found preset network layer as an optimal configuration of the target network layer;
for each target network layer, if there is no preset network layer corresponding to the target network layer in the prior information of the preset model cost evaluation table, determining each target hardware instruction required for realizing the function of the target network layer to obtain a hardware instruction set; searching the general information of the preset model cost evaluation table, determining a number of clock cycles required for executing the hardware instruction set respectively in each preset configuration, and selecting a preset configuration corresponding to the minimum number of clock cycles as the optimal configuration of the target network layer.

In a possible embodiment, the apparatus further includes a cost evaluation table establishing module, which is configured to: acquire a preset benchmark neural network model; for each benchmark network layer of the benchmark neural network model, determine preset hardware instructions required for realizing a function of the benchmark network layer in different hardware conditions, and execute each preset hardware instruction respectively in different preset configurations, obtain a number of clock cycles required for executing each preset hardware instruction respectively in different preset configurations and record it in the model cost evaluation table as general information; acquire a preset dedicated neural network model; for each dedicated network layer of the dedicated neural network model, realize a function of the dedicated network layer by using each preset hardware instruction respectively in different preset configurations, obtain a number of clock cycles required for realizing the function of the dedicated network layer in different preset test modes, take a preset configuration corresponding to the minimum number of clock cycles as an optimal configuration of the dedicated network layer, obtain an optimal configuration of the dedicated network layer in different preset test modes and record it in the model cost evaluation table as prior information.

In a possible embodiment, the apparatus further includes:
a configuration file generating module, configured to generate a configuration file of the target neural network model according to the optimal configuration of each network layer in the target neural network model;
a configuration file sending module, configured to send the configuration file and the target neural network model to the target hardware, so that the target hardware configures the target neural network model according to the configuration file and runs the configured target neural network model.

An embodiment of the present application further provides an electronic device, including: a processor and a memory; wherein
the memory is configured to store a computer program;
the processor is configured to, when the computer program stored on the memory is executed by the processor, carry out any one of the method for determining a configuration of a neural network model.

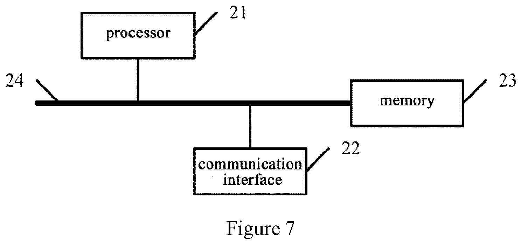

Optionally, referring to Figure 7, in addition to the processor 21 and the memory 23, the electronic device in the embodiment of the present application also includes a communication interface 22 and a communication bus 24, wherein the processor 21, the communication interface 22, and the memory 23 communicate with each other through the communication bus 24.

The communication bus mentioned in the above-mentioned electronic device can be a PCI (Peripheral Component Interconnect) bus or an EISA (Extended Industry Standard Architecture) bus, etc. The communication bus can be divided into address bus, a data bus, a control bus, and the like. For ease of indication, only one thick line is used in the figure, but it does not mean that there is only one bus or one type of bus.

The communication interface is used for communication between the above-mentioned electronic device and other devices.

The memory may include RAM (Random Access Memory) or NVM (Non-Volatile Memory), such as at least one disk memory. Optionally, the memory may also be at least one storage apparatus located far away from the aforementioned processor.

The above-mentioned processor can be a general-purpose processor, including a CPU (Central Processing Unit), an NP (Network Processor), etc.; it can also be a DSP (Digital Signal Processing), an ASIC (Application Specific Integrated Circuit), an FPGA (Field-Programmable Gate Array) or other programmable logic devices, discrete gate or transistor logic devices, and discrete hardware components.

An embodiment of the present application further provides a computer-readable storage medium, which stores a computer program thereon, wherein when the computer program is executed by a processor, the computer program carries out any one of the methods for determining a configuration of a neural network model according to the above embodiments.

In yet another embodiment provided by the present application, a computer program product including instructions is also provided, which, when running on a computer, causes the computer to carry out any one of the methods for determining a configuration of a neural network model according to the above embodiments.

In the above embodiments, it may be implemented in whole or in part by software, hardware, firmware or any combination thereof. When implemented in software, it can be implemented in whole or in part in the form of a computer program product. The computer program product includes one or more computer instructions. When the computer program instructions are loaded and executed on a computer, the processes or functions described in the embodiments of the present application are generated in whole or in part. The computer may be a general purpose computer, special purpose computer, computer network, or other programmable device. The computer instructions may be stored in a computer readable storage medium or transmitted from one computer readable storage medium to another computer readable storage medium, for embodiment, the computer instructions may be transmitted from a website, computer, server or data center to another website, computer, server, or data center by wire (such as coaxial cable, fiber optic, digital subscriber line) or wirelessly (such as infrared, wireless, microwave, etc.). The computer-readable storage medium may be any usable medium that can be accessed by a computer or a data storage device such as a server and a data center and the like that includes an integration of one or more available media. The usable media may be magnetic media (such as a floppy disk, a hard disk, a magnetic tape), optical media (such as DVD), or semiconductor media (such as Solid State Disk (SSD)) and the like.

It should be noted that, here, the technical features in each optional solution can be combined to form a solution as long as they are not contradictory, and these solutions are within the scope of application of this application relational terms. Such as first and second and the like herein are only used to distinguish one entity or operation from another and do not necessarily require or imply any such actual relationship or order between these entities or operations. Moreover, the terms "comprising", "including" or any other variations thereof are intended to encompass a non-exclusive inclusion such that a process, method, article or device that includes a series of elements includes not only those elements, but also includes other elements not explicitly listed or other elements inherent to such a process, method, article or apparatus. Without further limitation, elements defined by the phrase "comprising one..." do not preclude the presence of additional identical elements in a process, method, article or device that includes the mentioned elements.

The various embodiments in this specification are described in a related manner. Each embodiment focuses on the differences from other embodiments, and the same and similar parts between the various embodiments can be referred to each other. Especially, for the embodiment of the apparatus, the electronic device, the computer-readable storage medium, and the computer program product, the description is relatively simple because it is basically similar to the embodiment of the method, and the relevant points can be referred to the partial description of the embodiment of the method.

The above descriptions are only preferred embodiments of the present application, and are not intended to limit the present application. Any modifications, equivalent replacements, improvements and the like made within the spirit and principles of the present application shall be included within the scope of protection of the present application.

## Claims

1. A method for determining a configuration of a neural network model, comprising:
acquiring dimension information of each target network layer in a target neural network model to be configured, and each target hardware instruction for a target hardware for running the target neural network model;
searching prior information and general information in a preset model cost evaluation table according to the dimension information of each target network layer and each target hardware instruction, and determining respectively a preset configuration of each target network layer corresponding to a minimum number of clock cycles of the target network layer running on the target hardware, so as to obtain an optimal configuration of each target network layer in the target neural network model,
wherein the prior information comprises an optimal configuration of each preset network layer acquired in advance in different preset test modes, a preset test mode representing using each preset hardware instruction to realize a function of each preset network layer, each preset network layer corresponding to corresponding dimension information, the optimal configuration being a configuration corresponding to the minimum number of clock cycles; and the general information comprises a number of clock cycles required for executing each preset hardware instruction in different preset configurations.

2. The method according to claim 1, wherein, searching the prior information and the general information in the preset model cost evaluation table according to the dimension information of each target network layer and each target hardware instruction, and determining respectively the preset configuration of each target network layer corresponding to the minimum number of clock cycles of the target network layer running on the target hardware, so as to obtain the optimal configuration of each target network layer in the target neural network model, comprises:
for each target network layer, searching the prior information of the preset model cost evaluation table according to the dimension information of the target network layer, if the preset network layer corresponding to the target network layer is found, taking the optimal configuration of a found preset network layer as an optimal configuration of the target network layer;
for each target network layer, if there is no preset network layer corresponding to the target network layer in the prior information of the preset model cost evaluation table, determining each target hardware instruction required for realizing a function of the target network layer to obtain a hardware instruction set; searching the general information of the preset model cost evaluation table, determining a number of clock cycles required for executing the hardware instruction set respectively in each preset configuration, and selecting a preset configuration corresponding to the minimum number of clock cycles as the optimal configuration of the target network layer.

3. The method according to claim 2, wherein establishing the preset model cost evaluation table in advance comprises:
acquiring a preset benchmark neural network model;
for each benchmark network layer of the benchmark neural network model, determining preset hardware instructions required for realizing a function of the benchmark network layer in different hardware conditions, and executing each preset hardware instruction respectively in different preset configurations, obtaining a number of clock cycles required for executing each preset hardware instruction respectively in different preset configurations and recording it in a model cost evaluation table as general information;
acquiring a preset dedicated neural network model;
for each dedicated network layer of the dedicated neural network model, realizing a function of the dedicated network layer by using each preset hardware instruction respectively in different preset configurations, obtaining a number of clock cycles required for realizing the function of the dedicated network layer in different preset test modes, taking a preset configuration corresponding to the minimum number of clock cycles as an optimal configuration of the dedicated network layer, obtaining an optimal configuration of the dedicated network layer in different preset test modes and recording it in the model cost evaluation table as prior information.

4. The method according to claim 1, wherein, the method further comprises:
generating a configuration file of the target neural network model according to the optimal configuration of each network layer in the target neural network model;
sending the configuration file and the target neural network model to the target hardware, so that the target hardware configures the target neural network model according to the configuration file and runs a configured target neural network model.

5. An apparatus for determining a configuration of a neural network model, comprising:
a dimensional information acquiring module, configured to acquire dimension information of each target network layer in a target neural network model to be configured, and each target hardware instruction for a target hardware for running the target neural network model;
an optimal configuration determining module, configured to search prior information and general information in a preset model cost evaluation table according to the dimension information of each target network layer and each target hardware instruction, and determining respectively a preset configuration of each target network layer corresponding to a minimum number of clock cycles of the target network layer running on the target hardware, so as to obtain an optimal configuration of each target network layer in the target neural network model, wherein the prior information comprises an optimal configuration of each preset network layer acquired in advance in different preset test modes, a preset test mode representing using each preset hardware instruction to realize a function of each preset network layer, each preset network layer corresponding to corresponding dimension information, the optimal configuration being a configuration corresponding to the minimum number of clock cycles; and the general information comprises a number of clock cycles required for executing each preset hardware instruction in different preset configurations.

6. The apparatus according to claim 5, wherein the optimal configuration determining module is specifically configured to: for each target network layer, search the prior information of the preset model cost evaluation table according to the dimension information of the target network layer, if the preset network layer corresponding to the target network layer is found, taking the optimal configuration of a found preset network layer as an optimal configuration of the target network layer;
for each target network layer, if there is no preset network layer corresponding to the target network layer in the prior information of the preset model cost evaluation table, determining each target hardware instruction required for realizing a function of the target network layer to obtain a hardware instruction set; searching the general information of the preset model cost evaluation table, determining a number of clock cycles required for executing the hardware instruction set respectively in each preset configuration, and selecting a preset configuration corresponding to the minimum number of clock cycles as the optimal configuration of the target network layer.

7. The apparatus according to claim 6, wherein the apparatus further comprises a cost evaluation table establishing module, configured to: acquire a preset benchmark neural network model; for each benchmark network layer of the benchmark neural network model, determine preset hardware instructions required for realizing a function of the benchmark network layer in different hardware conditions, and execute each preset hardware instruction respectively in different preset configurations, obtain a number of clock cycles required for executing each preset hardware instruction respectively in different preset configurations and record it in a model cost evaluation table as general information; acquire a preset dedicated neural network model; for each dedicated network layer of the dedicated neural network model, realize a function of the dedicated network layer by using each preset hardware instruction respectively in different preset configurations, obtain a number of clock cycles required for realizing the function of the dedicated network layer in different preset test modes, take a preset configuration corresponding to the minimum number of clock cycles as an optimal configuration of the dedicated network layer, obtain an optimal configuration of the dedicated network layer in different preset test modes and record it in the model cost evaluation table as prior information.

8. The apparatus according to claim 5, wherein, the apparatus further comprises:
a configuration file generating module, configured to generate a configuration file of the target neural network model according to the optimal configuration of each network layer in the target neural network model;
a configuration file sending module, configured to send the configuration file and the target neural network model to the target hardware, so that the target hardware configures the target neural network model according to the configuration file and runs a configured target neural network model.

9. An electronic device, comprising a processor and a memory; wherein
the memory is configured to store a computer program; and
the processor is configured to, when the computer program stored on the memory is executed by the processor, carry out the method according to any one of claims 1 to 4.

10. A computer-readable storage medium, which stores a computer program thereon, wherein when the computer program is executed by a processor, the computer program carries out the method according to any one of claims 1 to 4.
